Europäisches Patentamt

European Patent Office

Office européen des brevets

(11) Veröffentlichungsnummer: **0 312 699 B1**

# EUROPÄISCHE PATENTSCHRIFT

(45) Veröffentlichungstag der Patentschrift: **04.03.92**

(51) Int. Cl.⁵: **A61C 13/00**

(21) Anmeldenummer: **88110342.8**

(22) Anmeldetag: **29.06.88**

(54) **Verfahren zur Herstellung von Dental-Ersatzteilen, wie Kronen- oder Brücken, mittels Funkenerosion.**

(30) Priorität: **21.10.87 DE 3735558**

(43) Veröffentlichungstag der Anmeldung:
**26.04.89 Patentblatt 89/17**

(45) Bekanntmachung des Hinweises auf die
Patenterteilung:
**04.03.92 Patentblatt 92/10**

(84) Benannte Vertragsstaaten:
**CH DE FR GB IT LI SE**

(56) Entgegenhaltungen:
**EP-A- 0 225 513**
**DE-C- 3 320 902**

**DEUTSCHE ZAHNÄRZTLICHE ZEITSCHRIFT, Heft 1, 41. Jahrgang, Januar 1986, Carl Hanser Verlag, München E.KÖRBER et al. "Herstellung einer Metallhülsenkrone aus Vollmaterial mit Hilfe der Funkenerosion" Seiten 525,526**

(73) Patentinhaber: **Heraeus Kulzer GmbH**
**Heraeusstr. 12 - 14**
**W-6450 Hanau(DE)**

(72) Erfinder: **Domes, Anton**
**Varangevillerstrasse 46**
**W-6454 Bruchköbel(DE)**
Erfinder: **Höritzer, Alfred**
**Ludmannstrasse 19 a**
**W-7000 Stuttgart 31(DE)**

(74) Vertreter: **Grimm, Ekkehard**
**Heraeus Holding GmbH Heraeusstrasse 12 - 14**
**W-6450 Hanau/Main(DE)**

## Beschreibung

Die Erfindung betrifft ein Verfahren zur Herstellung von Dental-Ersatzteilen, wie Kronen- oder Brücken, mittels Funkenerosion, wobei zunächst ein positives Wachsmodell hergestellt wird, das Wachsmodell in eine Gußform eingebettet, das Wachs entfernt, zwei Formelektroden erstellt und das Ersatzteil mittels Funkenerosion unter Materialabtrag von einem Erodiergut erzeugt wird (siehe erster Teil von Anspruch 1).

Ein solches Verfahren ist in der Dtsch Zahnärztl Z 41, 525-526 (1986) unter der Überschrift "Herstellung einer Metallhülsenkrone aus Vollmaterial mit Hilfe der Funkenerosion" beschrieben. Gemäß diesem Verfahren werden Wachsmodelle von Kronen- oder Einlagefüllungen erstellt. Diese Wachsform wird oberhalb und unterhalb des Kronenäquators auf galvanischem Wege mit einer etwa 1 mm starken Kupferschicht überzogen und die beiden im Bereich der Äquatorebene trennbaren Kupferformen mit einem verstärkenden Hinterbau aufgefüttert. Mit diesen beiden Formelektroden wird ein Metallrohling nacheinander erosiv bearbeitet. Die beiden Formelektroden dringen entsprechend dem erosiven Abtrag ein und formen daraus das Dentalersatzteil. Die Genauigkeit des zu erodierenden Ersatzteiles, insbesondere im Bereich seiner Oberfläche, kann durch Änderung der Abtraggeschwindigkeit variiert werden. Dem Artikel ist zu entnehmen, daß die Funkenerosion eines solchen Ersatzteiles etwa eine Stunde benötigt. Ein Verkürzen der Erodierzeit kann durch vorgeformte Metallkörper, die als Erodiergut eingesetzt werden, erreicht werden.

Aus der DE-PS 33 20 902 ist ein Verfahren zur Herstellung von Zahnersatzteilen, insbesondere Gußfüllungen, Teil- oder Vollkronen, bekannt, bei dem eine hohe Paßgenauigkeit zwischen einem Zahnstumpf und einem darauf aufzusetzenden Ersatzteil erreicht werden soll. Hierzu wird in mehreren Abformschritten ein positives Modell des Zahnstumpfes erstellt und die an den Zahnstumpf anzupassende Fläche des vorgefertigten Zahnersatzes mittels Erodierverfahren angepaßt. Auf das vorgefertigte Zahnersatzteil werden nur sehr dünne Schichten im Bereich der späteren Anlagefläche an den Zahnstumpf auferodiert.

Schließlich ist aus der EP-A2-0 225 513 ein Verfahren und eine Vorrichtung zur Herstellung von Zahnersatzteilen bekannt. Gemäß dem dort angegebenen Verfahren wird mit Hilfe von zwei Formelektroden das herzustellende Zahnersatz mittels Funkenerosion direkt aus einem vorher nicht bearbeiteten Vollmaterial hergestellt.

Der erosive Abtrag zur Herstellung des Zahnersatzteiles ist, wie bereits vorstehend ausgeführt wurde, zeitaufwendig.

Der vorliegenden Erfindung liegt nun die Aufgabe zugrunde, ein Verfahren zum Herstellen von Zahnersatzteilen unter Einsatz des Funkenerosionsverfahrens anzugeben, mit dem die gleichzeitige Herstellung einer Vielzahl von unterschiedlichen Ersatzteilen mit hoher Paßgenauigkeit sowohl der Bißfläche als auch des Trägerkörpers, der beispielsweise auf den Zahnstumpf aufgesetzt wird, gegeben ist.

Diese Aufgabe wird ausgehend von dem eingangs beschriebenen Verfahren durch folgende Verfahrensschritte gelöst:

a) Die einzelnen positiven Wachsmodelle einer Vielzahl von herzustellenden Ersatzteilen werden jeweils auf einem Träger angeordnet, in geringem Abstand zueinander auf einer gemeinsamen Unterlage aufgesetzt, wobei die einzelnen Ersatzteile derart im Niveau über der Unterlage angeordnet und ausgerichtet werden, daß die breiteste horizontale Schnittebene jedes Ersatzteiles in einer gemeinsamen Äquatorebene liegt,

b) Einsetzen dieser nach a) vorbereiteten Anordnung in einen Gießrahmen,

c) Auffüllen der Bereiche zwischen den einzelnen Ersatzteilen mit einer Ausformmasse bis zur Äquatorebene, wobei in mindestens zwei Zwischenräume jeweils ein senkrecht zur Äquatorebene verlaufender und über diese hinausragender Orientierungs-Stift eingebracht wird,

d) die Oberfläche des so gebildeten ersten Modells wird gereinigt,

e) auf die gereinigte Oberfläche wird ein als Trenn- und Leitschicht dienender Silberüberzug aufgebracht und die Silberschicht galvanisch mit einer Kupferverstärkung überzogen,

f) Aufbringen eines stabilisierenden Hinterbaues auf die Kupferschicht,

g) Ausformen des so gebildeten Aufbaues und Abtrennung des im Verfahrensschritt c) erhaltenen Modells,

h) Drehen des Modells um 180° um eine in der Äquatorebene liegenden Achse,

i) Einsetzen des gedrehten ersten Modells in einen mit einer aushärtenden Trägermasse gefüllten Gießrahmen,

j) Ablösen der Träger zusammen mit der zwischen den Trägern befindlichen Ausformmasse nach Aushärten der Trägermasse,

k) Aufbringen einer Silberschicht auf die nach Verfahrensschritt j) erhaltene Oberfläche, Überziehen der Silberschicht mit einer galvanischen Kupferverstärkung,

l) Aufbringen eines stabilisierenden Hinterbaues auf die Kupferschicht,

m) Ausformen des so gebildeten zweiten Modells oberhalb der Äquatorebene,

n) orientiertes Einsetzen des einen Modells in den Pinolenkopf einer Erosionsvorrichtung über dem Erodiergut und erodieren,

o) Drehen des Erodiergutes um 180° um eine in der Äquatorebene liegenden Achse,

p) Orientiertes Einsetzen des anderen Modells in den Pinolenkopf über dem gedrehten Erodiergut und erodieren,

q) Entfernen verbleibender Stege im Bereich der Äquatorebene von den Ersatzteilen.

Mit dem angegebenen Verfahren ist die Möglichkeit gegeben, eine Vielzahl von Zahnersatzteilen rationel mit einer sehr hohen Genauigkeit herzustellen. Ein wesentlicher Verfahrensschritt ist hierbei, die positiven Modelle (hierbei handelt es sich üblicherweise um Wachsmodelle) auf einem gemeinsamen Träger anzuordnen derart, daß Gußformen herstellbar und ausformbar sind. Die einzelnen Ersatzteile werden hierzu in einer gemeinsamen Äquatorebene ausgerichtet, und zwar in ihrer breitesten horizontalen Schnittebene, wobei diese Äquatorebene die Trennebene für die späteren Erodierelektroden ist. In einem weiteren wesentlichen Verfahrensschritt werden die Zwischenräume zwischen den einzelnen Ersatzteilen bis zu dieser Äquatorebene aufgefüllt, um zunächst die obere Elektrode herzustellen. Damit während der einzelnen Verfahrensschritte eine bleibende Zuordnung zwischen den Modellen zur Herstellung der Elektroden zu erhalten, werden bereits mit dem Auffüllen der Zwischenräume zwischen den einzelnen Zahnersatzteil-Wachsmodellen eine oder mehrere Orientierungsstifte senkrecht zur Äquatorebene angeordnet. Bevorzugt werden die Zahnersatzteile auf den Boden einer Wanne aufgesetzt, deren Seitenwände gleichzeitig den Gießrahmen bilden. Als Gießmasse wird vorzugsweise eine leicht fließende Masse aus einer Silikonmischung verwendet. Nach Aushärten dieser Silikonmischung wird die Oberfläche von Verunreinigungen, insbesondere von Fetten und Ölen, gereinigt, um anschließend das gereinigte Modell mit einer dünnen Silberschicht, die als Leitschicht der späteren Erodierelektrode dient, zu überziehen. In einem anschließenden Verfahrensschritt wird die Silberschicht galvanisch mit einer als Verstärkung dienenden Kupferschicht überzogen. An die Kupferschicht können am Rand zum Gießrahmen hin Kontakte angelötet werden. Nachdem die Kupferschicht erstellt ist, wird ein weiterer, stabilisierender Hinterbau, beispielsweise aus Kunstharz, aufgebracht. Der gesamte Aufbau wird nunmehr ausgeformt und der zuletzt aufgebrachte Hinterbau parallel zur Äquatorebene bzw. Trennebene zwischen der Ausfüllmasse und der Silberschicht gefräst oder geschliffen, damit dieses Teil orientiert in den Pinolenkopf einer Erosionsvorrichtung einsetzen zu können.

Zum Herstellen der zweiten Elektrode wird nunmehr das erste Modell um 180° um eine in der Äquatorebene liegenden Achse gedreht und in die Form, die im Bodenbereich mit einer aushärtenden Trägermasse aufgefüllt ist, eingesetzt. Nachdem die Trägermasse ausgehärtet ist, werden die nach oben stehenden einzelnen Träger der Wachsmodelle sowie das zwischen den einzelnen Trägern befindliche Füllmaterial, das zum Herstellen der ersten Elektrode zwischen die einzelnen Träger eingegossen wurde, abgelöst, so daß nunmehr die einzelnen Modelle um ihren Äquator gedreht in fester Zuordnung zueinander in der Gießform einsitzen. Nunmehr wird wiederum die Anordnung zunächst mit einer Silberschicht und anschließend galvanisch mit einer Kupfer-Verstärkung überzogen. Weiterhin werden die elektrischen Anschlüsse befestigt und ein stabilisierender Hinterbau auf die Kupferschicht aufgebracht. Nach Ausformen kann das obere Teil abgenommen und nach Beischleifen der Oberseite parallel zur Äquatorebene als zweite Elektrode mittels der Orientierungsstifte in den Pinolenkopf einer Erodiermaschine eingesetzt werden. Der Erodierblock wird dann von beiden Seiten mit der einen bzw. der anderen Elektrode erodiert bis die Elektroden in einer der ursprünglichen der Äquatorebene entsprechenden Ebene verbleiben und die Zahnersatzteile erhalten werden. Diese können noch durch Stege miteinander verbunden sein, die abgetrennt werden. Dadurch daß ursprünglich in die Modelle Orientierungstifte eingegossen wurden, ist die Möglichkeit gegeben, im Rahmen des bzw. der Erodiervorgänge die beiden Elektroden orientiert in die Erodiermaschine einzusetzen.

Bevorzugt werden die Bereiche zwischen den einzelnen auf den Trägern angeordneten Zahnersatzteilen mit einer Ausformmasse aus einem Silikonkautschuk aufgefüllt, der besonders gleichmäßig in die Zwischenräume einläuft und entlang der einzelnen Ersatzteile sich nicht nach oben wölbt.

Zur Bildung des jeweiligen stabilisierenden Hinterbaues sowie der Trägermasse, in der zum Aufbau des zweiten Modelles die einzelnen Wachsmodelle um 180° um die Äquatorebene gedreht angeordnet werden, hat sich ein kalthärtendes Gießharz besonders gut bewährt, in dem während und nach dem Aushärten keine oder nur geringe Spannungen entstehen.

Besonders gleichmäßig können werden die Dentalteile aus Wachs sowie die Oberfläche der zwischen dem Träger befindlichen Ausformmasse mit einer dünnen aufgesprühten Silberschicht auch in den Eckbereichen überzogen werden. Die Schichtdicke sollte hierbei 2 und 100 $\mu$m, bevorzugt 2 und 5 $\mu$m betragen, d.h. die Silberschicht soll äußerst dünn sein. Die stabilisierende Kupferschicht dagegen, die galvanisch aufgebracht wird, soll bevorzugt etwa 1 mm dick, mindestens jedoch 0,5 mm dick, sein.

Weitere Einzelheiten und Merkmale der Erfindung ergeben sich aus der nachfolgenden Beschreibung eines Ausführungsbeispieles anhand der Zeichnung. In der Zeichnung zeigt

Figur 1      eine Unterlage, auf der einzelne Dentalmodelle auf Trägern angeordnet sind,

Figur 2      die Anordnung nach Figur 1 in einer Gießwanne,

Figur 3      die Anordnung nach Figur 2 mit einem zusätzlichen Hinterbau,

Figur 4      die Wachsmodelle in gedrehter Anordnung,

Figur 5 und 6      die beiden nach den Verfahrensschritten 1 bis 4 hergestellten Erodierköpfe in einer Erodiervorrichtung, und

Figur 7      die durch Stege miteinander verbundenen erodierten Zahn-Ersatzteile

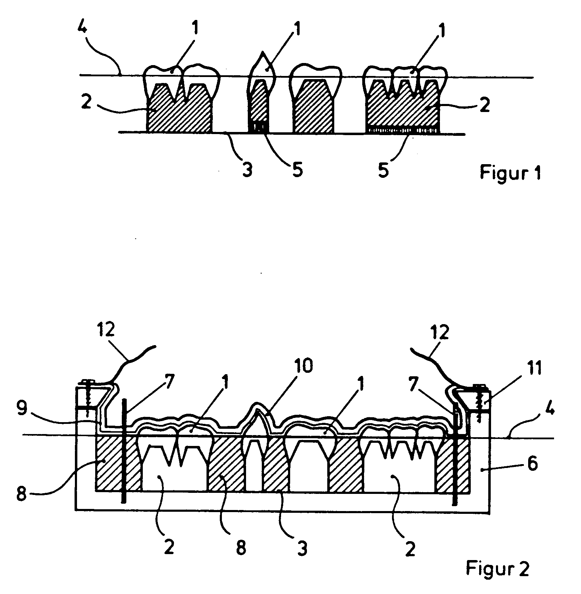

Zum Herstellen einer ersten Erodierelektrode werden die einzelnen Wachsmodelle 1, die auf Gipskörper 2 (Träger) aufgesetzt sind, auf einer Unterlage 3 angeordnet. An jedem Wachsmodell 1 ist eine Äquatorebene angezeichnet, die der breitesten horizontalen Schnittebene entspricht. Die einzelnen Ersatzteile werden derart auf einer Unterlage 3 mit Abstand zueinander ausgerichtet, daß die einzelnen angezeichneten Äquatorlinien in einer gemeinsamen Äquatorebene ausgerichtet sind. Falls erforderlich, können einzelne Gipskörper 2 mit Distanzklötzen 5 unterfüttert werden, um die Äquatorebene 4 zu erreichen. Die ausgerichteten Ersatzteile werden dann, wie in Figur 2 dargestellt, mit ihrer Unterlage 3 in einen Galvanorahmen 6, der wannenartig ausgebildet ist, eingesetzt. Anstelle einer gesonderten Unterlage 3 ist es möglich, die Gipskörper 2 mit den Wachsmodellen 1 direkt auf den Boden des Galvanorahmens 6 als Unterlage aufzusetzen und in der Äquatorebene 4 auszurichten. Im Randbereich des Galvanorahmens 6 sind senkrecht zu der Unterlage 3 zwei Paßstifte 7 eingesetzt, die die Orientierung des Modells, auch für das spätere Einsetzen in einen Erodierkopf, festlegen. Nachdem die Paßstifte 7 eingesetzt sind, wird der Zwischenraum zwischen den einzelnen Gipskörpern 2 sowie zwischen den Gipskörpern 2 und dem Galvanorahmen 6 mit einer Ausformmasse 8, bei der es sich um ein Silikon handelt, bis zur Äquatorhöhe ausgehärtet. Eine derartige Ausformmasse 8 aus Silkon zeichnet sich besonders gut dadurch aus, daß an der Oberfläche scharfe Begrenzungen bzw. Ränder in der Äquatorebene 4 an den hervorstehenden Wachsmodellen entstehen.

Nachdem die Oberfläche des sogenannten ersten Modelles von Verunreinigungen, insbesondere von abgeschiedenem Silkonöl oder sonstigen Fetten, gereinigt wurde, wird auf die oberfläche der Wachsmodelle und der Silikon- bzw. Ausformmasse 8 in der Äquatorebene 4 eine dünne Silberschicht 9 aufgesprüht, deren Dicke etwa 10 μm beträgt. Im Anschluß daran wird auf die Silberschicht 9 eine dicke, stabilisierende Kupfer-Galvanoschicht 10 abgeschieden, deren Dicke etwa 0,7 mm beträgt. Das Galvanisieren erfolgt über mehrere Stunden, wobei mit niedriger Anfangsspannung begonnen wird. Wie die Figur 2 zeigt, ist auf dem Rand des Galvanorahmens ein zusätzlicher Rahmen 11 mit nach innen vorspringendem Rand aufgesetzt, an den Anschluß-Kontakte 12 befestigt sind, die die Silberschicht 9 sowie die Kupfer-Galvanoschicht 10 kontaktieren. Die Silberschicht 9 dient als Trenn- und Leitschicht und bildet die Erodier- und Kontaktfläche des herzustellenden Erodierkopfes.

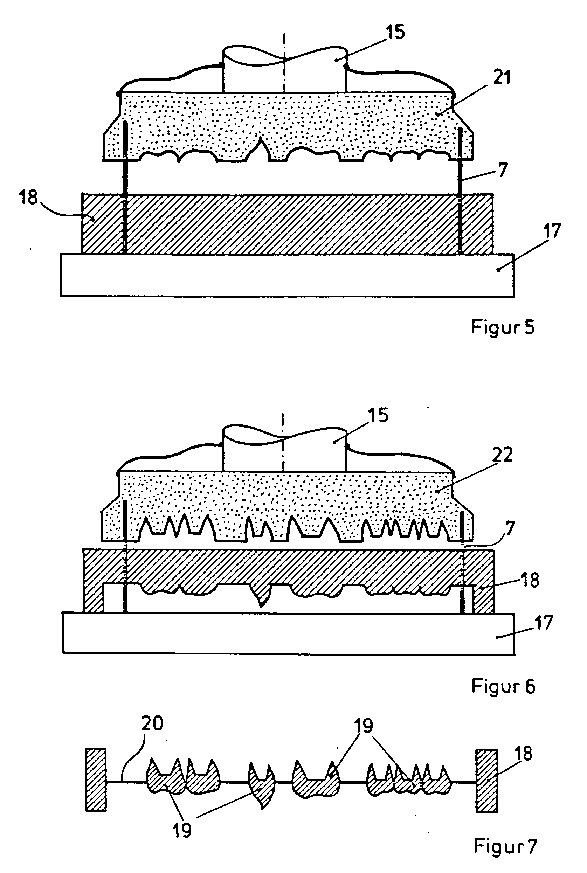

Um die Silberschicht 9 und die Kupfer-Galvanoschicht 10 zu stabilisieren, wird ein stabilisierender Hinterbau 13, beispielsweise aus Kunstharz, angegossen. Ein zusätzlicher Gießrahmen 14 erhöht die Füllhöhe für diesen Hinterbau 13. Schließlich wird die Oberseite des Hinterbaues 13 parallel zu der Äquatorebene 4 geschliffen, bevor dieser sogenannte Galvano 21 aus dem Galvanorahmen 6 herausgenommen und, nachdem er mit einer Bürste gereinigt wurde, in einen Pinolenkopf 15 eine Erosionsvorrichtung, wie dies Figur 5 zeigt, eingesetzt werden kann.

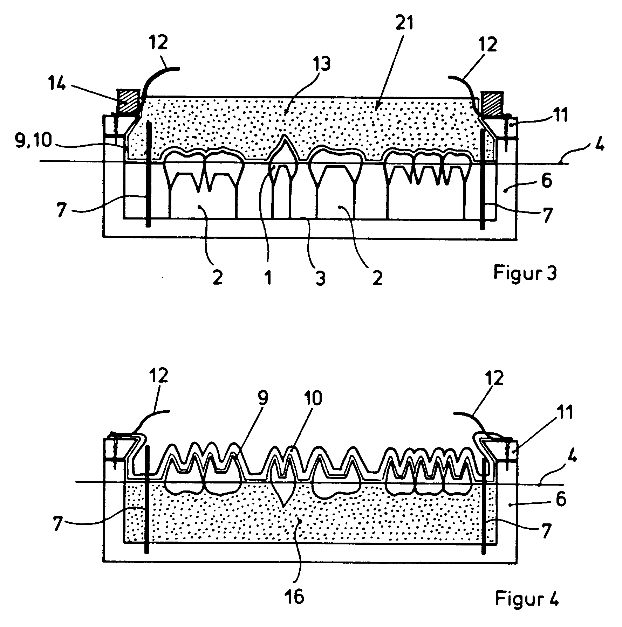

Zum Anfertigen der Gegenelektrode 22, die im gezeigten Beispiel der Form der unterhalb der Äquatorebene befindlichen Bereiche der Wachsmodelle entspricht, wird nunmehr das Modell, wie es die Figur 3 zeigt, mit den einzelnen auf den Gipskörpern 2 aufgesetzten Wachsmodellen 1 und der Ausformmasse 8 dem Galvanorahmen 6 entnommen und um 180° gedreht wieder in den Galvanorahmen 6 eingesetzt. Vor dem Einsetzen dieses Modells in den Galvanorahmen 6 wird dieser mit einer Trägermasse 16, wie dies Figur 4 zeigt, aufgefüllt. Die Paßstifte 7 ermöglichen hierbei wiederum ein orientiertes Einsetzen des Modelles in den Galvanorahmen 6. Nachdem die Trägermasse 16 ausgehärtet ist, werden die nach oben stehenden Gipskörper 2 sowie die Ausformmasse 8 von den Wachsmodellen 1 abgelöst. Damit wird eine Anordnung erhalten, wie sie Figur 4 zeigt, in der die einzelnen Wachsmodelle nunmehr um 180° gedreht über die Äquatorebene 4 hervorstehen. Die Oberfläche wird gegebenenfalls wieder gereinigt und, entsprechend der anhand der Figur 2 gezeigten Verfahrensweise, zunächst eine Silberschicht 9 und anschließend eine verstärkende Kupfer-Galvanoschicht 10 aufgebracht sowie Anschluß-Kontakte 12 befestigt. Schließlich wird auf die Kupferschicht wiederum ein nicht näher dargestellter stabilisierender Hinterbau aufgebracht und die Oberseite des Hinterbaues parallel zur Äquatorebene 4 beschliffen. Diese zweite Elektrode kann nun ebenfalls in einer Erodiervorrichtung orientiert mittels der Paßstifte 7 eingesetzt werden.

Figur 5 zeigt schematisch eine Erodiervorrichtung mit einem Erodiertisch 17, auf dem ein Erodiergut 18, beispielsweise ein Metallkörper aus einer Nickel-Chrom-Legierung oder einer Edelmetall enthaltenden Legierung, aufgesetzt ist. Mit dem ersten Galvano 21 wird nunmehr das Erodiergut 18 erodiert, bis die Form der Elektrode, die dem Bereich der Zahnersatzteile oberhalb der Äquatorebene entspricht, in dem Erodiergut 18 nachgebildet ist. Das Erodiergut wird nunmehr der Erodiervorrichtung entnommen und um 180° gedreht wiederum eingesetzt, wie dies Figur 6 zeigt. Nunmehr kann mit der zweiten Elektrode 22 die Gegenseite des Erodiergutes 18 erodiert werden, so daß die einzelnen Zahnersatzteile 19, wie in Figur 7 gezeigt, vollständig nachgebildet sind. Die einzelnen Ersatzteile 19 sind hierbei durch dünne Stäbe 20 miteinander verbunden, so daß sie leicht voneinander getrennt werden können. Es besteht auch die Möglichkeit, das Erodiergut 18 gleichzeitig von beiden Seiten zu erodieren.

**Patentansprüche**

1. Verfahren zur Herstellung von Dental-Ersatzteilen, wie Kronen- oder Brücken, mittels Funkenerosion, wobei zunächst ein positives Wachsmodell hergestellt wird, das Wachsmodell in eine Gußform eingebettet, das Wachs entfernt, zwei Formelektroden erstellt und das Ersatzteil mittels Funkenerosion unter Materialabtrag von einem Erodiergut erzeugt wird,

gekennzeichnet durch folgende Verfahrensschritte:

a) Die einzelnen positiven Wachsmodelle einer Vielzahl von herzustellenden Ersatzteilen werden jeweils auf einem Träger (2) angeordnet, in geringem Abstand zueinander auf einer gemeinsamen Unterlage aufgesetzt, wobei die einzelnen Ersatzteile derart im Niveau über der Unterlage angeordnet und ausgerichtet werden, daß die breiteste horizontale Schnittebene jedes Ersatzteiles in einer gemeinsamen Äquatorebene (4) liegt,
b) Einsetzen dieser nach a) vorbereiteten Anordnung in einen Gießrahmen (6),
c) Auffüllen der Bereiche zwischen den einzelnen Ersatzteilen mit einer Ausformmasse (8) bis zur Äquatorebene, wobei in mindestens zwei Zwischenräume jeweils ein senkrecht zur Äquatorebene verlaufender und über diese hinausragender Orientierungs-

stift (7) eingebracht wird,
d) die Oberfläche des so gebildeten ersten Modells wird gereinigt,
e) auf die gereinigte Oberfläche wird ein als Trenn- und Leitschicht dienender Silberüberzug (9) aufgebracht und die Silberschicht galvanisch mit einer Kupferverstärkung (10) überzogen,
f) Aufbringen eines stabilisierenden Hinterbaues (13) auf die Kupferschicht,
g) Ausformen des so gebildeten Aufbaues und Abtrennung des im Verfahrensschritt c) erhaltenen Modells,
h) Drehen des Modells um 180° um eine in der Äquatorebene liegenden Achse,
i) Einsetzen des gedrehten ersten Modells in einen mit einer aushärtenden Trägermasse gefüllten Gießrahmen,
j) Ablösen der Träger (2) zusammen mit der zwischen den Trägern befindlichen Ausformmasse (8) nach Aushärten der Trägermasse,
k) Aufbringen einer Silberschicht (9) auf die nach Verfahrensschritt j) erhaltene Oberfläche, Überziehen der Silberschicht mit einer galvanischen Kupferverstärkung (10),
l) Aufbringen eines stabilisierenden Hinterbaues auf die Kupferschicht,
m) Ausformen des so gebildeten zweiten Modells oberhalb der Äquatorebene,
n) orientiertes Einsetzen des einen Modells (21) in den Pinolenkopf (15) einer Erosionsvorrichtung über dem Erodiergut (18) und erodieren,
o) Drehen des Erodiergutes um 180° um eine in der Äquatorebene liegenden Achse,
p) Orierentiertes Einsetzen des anderen Modells (22) in den Pinolenkopf über dem gedrehten Erodiergut und erodieren,
q) Entfernen verbleibender Stege im Bereich der Äquatorebene von den Ersatzteilen.

2. Verfahren nach Anspruch 1, dadurch gekennzeichnet, daß im Verfahrensschritt c) die Bereiche zwischen den einzelnen Ersatzteilen mit einer Ausformmasse aus Silikonkautschuk aufgefüllt werden.

3. Verfahren nach Anspruch 1 oder 2, dadurch gekennzeichnet, daß in den Verfahrensschritten f), i) und/oder l) zum Aufbau des stabilisierenden Hinterbaus und/oder als Trägermasse kalthärtendes Gießharz eingesetzt wird.

4. Verfahren nach einem der Ansprüche 1 bis 3, dadurch gekennzeichnet, daß in den Verfahrensschritten e) und/oder k) die Silberschicht aufgesprüht wird.

5. Verfahren nach Anspruch 4, dadurch gekennzeichnet, daß eine Silberschicht in einer Dicke von etwa 2 bis 100 μm aufgebracht wird.

6. Verfahren nach Anspruch 5, dadurch gekennzeichnet, daß eine Schicht im Bereich von 2 bis 5 μm aufgebracht wird.

7. Verfahren nach einem der Ansprüche 1 bis 6, dadurch gekennzeichnet, daß in dem Verfahrensschritt e) und/oder k) eine dichte, mindestens 0,5 mm dicke Kupferschicht aufgebaut wird.

8. Verfahren nach Anspruch 7, dadurch gekennzeichnet, daß eine etwa 1 mm dicke Kupferschicht aufgebracht wird.

9. Verfahren nach einem der Ansprüche 1 bis 8, dadurch gekennzeichnet, daß im Verfahrensschritt a) die Wachsmodelle auf einem Träger aus Gips angeordnet werden.

10. Verfahren nach einem der Ansprüche 1 bis 9, dadurch gekennzeichnet, daß als Unterlage eine Gießwanne verwendet wird, wobei der Wannenrand den Gießrahmen bildet.

## Claims

1. A method for the production of dental replacement parts, such as crowns or bridges, by means of spark erosion, in which firstly a positive wax model is produced, the wax model is embedded into a mould, the wax is removed, two mould electrodes are set up and the replacement part is produced by means of spark erosion under evacuation of material from an eroding material,

   characterised by the following process steps:

   a) The individual positive wax models of a plurality of replacement parts which are to be produced are arranged respectively on a carrier (2), placed at a slight distance from each other on a common base, in which the individual replacement parts are arranged at a level above the base and are aligned such that the widest horizontal sectional plane of each replacement part lies in a common equator plane (4),
   b) the insertion of this arrangement, prepared in accordance with a), into a casting frame (6),
   c) the filling of the regions between the individual replacement parts with a forming-out substance (8) up to the equator plane, in which an orientation pin (7), running vertically to the equator plane and projecting beyond the latter, is introduced in each case into at least two intermediate spaces,
   d) the surface of the first model thus formed is cleaned,
   e) a silver coating (9), serving as a separating- and conducting layer, is deposited onto the cleaned surface and the silver layer is coated galvanically with a copper reinforcement (10),
   f) the application of a stabilised back structure (13) onto the copper layer,
   g) the forming out of the construction thus formed and separation of the model obtained in process step c),
   h) the turning of the model through 180° about an axis lying in the equator plane,
   i) the insertion of the turned first model into a casting frame which is filled with a hardening carrier substance,
   j) the loosening of the carrier (2) together with the forming-out substance (8) situated between the carriers, after the hardening of the carrier substance,
   k) the application of a silver layer (9) onto the surface obtained after process step j), the coating of the silver layer with a galvanic copper reinforcement (10),
   l) the application of a stabilised back structure onto the copper layer,
   m) the forming-out of the second model thus formed above the equator plane,
   n) the oriented insertion of one model (21) into the spindle sleeve head (15) of an erosion device over the eroding material (18) and eroding,
   o) the turning of the eroding material through 180° about an axis lying in the equator plane,
   p) the oriented insertion of the other model (22) into the spindle sleeve head over the turned eroding material and eroding,
   q) the removal of remaining cross-pieces in the region of the equator plane from the replacement parts.

2. A method according to Claim 1, characterised in that in the process step c) the regions between the individual replacement parts are filled with a forming-out substance of silicon rubber.

3. A method according to Claim 1 or 2, characterised in that in the process steps f), i) and/or l) for the construction of the stabilising back structure and/or as carrier substance, cold-setting casting resin is used.

4. A method according to one of Claims 1 to 3, characterised in that in the process steps e) and/or k) the silver layer is sprayed on.

5. A method according to Claim 4, characterised in that a silver layer with a thickness of approximately 2 to 100 $\mu$m is deposited.

6. A method according to Claim 5, characterised in that a layer in the range of 2 to 5 $\mu$m is deposited.

7. A method according to one of Claims 1 to 6, characterised in that in the process step e) and/or k) a dense copper layer is built up which is at least 0.5 mm thick.

8. A method according to Claim 7, characterised in that a copper layer is deposited which is approximately 1 mm thick.

9. A method according to one of Claims 1 to 8, characterised in that in the process step a) the wax models are arranged on a carrier of plaster of Paris.

10. A method according to one of Claims 1 to 9, characterised in that a casting trough is used as a base, in which the edge of the trough forms the casting frame.

**Revendications**

1. Procédé de fabrication de prothèses dentaires, telles que couronnes ou ponts, par électro-érosion, selon lequel on fabrique d'abord un modèle de cire positif, on incorpore le modèle de cire dans un moule de coulée, on élimine la cire, on forme deux électrodes de moule et on fabrique la prothèse par électro-érosion avec enlèvement de matière d'un produit d'érosion, caractérisé par les étapes suivantes :

a) les différents modèles de cire positifs d'une multiplicité de prothèses à fabriquer sont disposés chacun sur un support (2) à faible distance les uns des autres sur une base commune, les différentes prothèses étant agencées et alignées de niveau au-dessus de la base de telle manière que le plan de coupe horizontal le plus large de chaque prothèse soit situé dans un plan équatorial (4) commun,

b) insertion de cet agencement préparé selon a) dans un cadre de coulée (6),

c) remplissage des domaines entre les différentes prothèses par une masse de démoulage (8) jusqu'au plan équatorial, une broche d'orientation (7) qui s'étend perpendiculairement au plan équatorial et qui fait saillie au-dessus de celui-ci étant disposée dans au moins deux espaces intermédiaires,

d) la surface du premier modèle ainsi formé est nettoyée,

e) un revêtement d'argent (9) servant de couche de séparation et de couche conductrice est appliqué sur la surface nettoyée et la couche d'argent est recouverte par voie galvanique d'un renforcement de cuivre (10),

f) application sur la couche de cuivre d'un élément arrière (13) stabilisant,

g) démoulage de la structure ainsi formée et séparation du modèle obtenu à l'étape c),

h) rotation du modèle de 180° autour d'un axe situé dans le plan équatorial,

i) insertion du premier modèle ayant subi la rotation dans un cadre de coulée rempli d'une masse de support qui durcit,

j) séparation des supports (2) en même temps que la masse de démoulage (8) qui se trouve entre les supports après durcissement de la masse de support,

k) application d'une couche d'argent (9) sur la surface obtenue après l'étape j), revêtement de la couche d'argent avec un renforcement de cuivre galvanique,

l) application d'un élément arrière stabilisant sur la couche de cuivre,

m) démoulage du second modèle ainsi formé au-dessus du plan équatorial,

n) insertion orientée d'un modèle (21) dans la tête de fourreau (15) d'un dispositif d'érosion au-dessus du produit d'érosion (18) et érosion,

o) rotation du produit d'érosion de 180° autour d'un axe situé dans le plan équatorial,

p) insertion orientée de l'autre modèle (22) dans la tête de fourreau au-dessus du produit d'érosion qui a étourné et érosion,

q) séparation d'avec les prothèses des nervures restantes dans le domaine du plan équatorial.

2. Procédé selon la revendication 1, caractérisé en ce que, dans l'étape c), les domaines compris entre les différentes prothèses sont remplis d'une masse de démoulage en caoutchouc de silicone.

3. Procédé selon la revendication 1 ou 2, caractérisé en ce que, dans les étapes f), i) et/ou l), on insère une résine de coulée durcissant à froid pour la formation de l'élément arrière stabilisant et/ou comme masse de support.

4. Procédé selon l'une des revendications 1 à 3, caractérisé en ce que, dans les étapes e) et/ou k), la couche d'argent est appliquée par pulvérisation.

5. Procédé selon la revendication 4, caractérisé en ce qu'une couche d'argent épaisse d'environ 2 à 100 $\mu$m est appliquée.

6. Procédé selon la revendication 5, caractérisé en ce qu'une couche de 2 à 5 $\mu$m est appliquée.

7. Procédé selon l'une des revendications 1 à 6, caractérisé en ce que, dans l'étape e) et/ou k), une couche de cuivre dense épaisse d'au moins 0,5 mm est appliquée.

8. Procédé selon la revendication 7, caractérisé en ce qu'une couche de cuivre épaisse d'environ 1 mm est appliquée.

9. Procédé selon l'une des revendications 1 à 8, caractérisé en ce que dans l'étape a) les modèles de cire sont disposés sur un support de plâtre.

10. Procédé selon l'une des revendications 1 à 9, caractérisé en ce que l'on utilise comme base un moule fixe dont la paroi forme le cadre de coulée.

Figur 1

Figur 2

Figur 3

Figur 4

Figur 5

Figur 6

Figur 7